# EUROPEAN PATENT APPLICATION

(11) **EP 2 196 765 A1**
(43) Date of publication of application: **16.06.2010**
(21) Application number: 09466016.4
(22) Date of filing: 27.08.2009
(51) Int. Cl.: G01B 11/06, G01B 11/25

(54) **Measuring the outer dimensions of an object**

(30) Priority: 03.03.2009 CZ 20090133; 09.12.2008 CZ 20080793
(71) Applicant: WiTrins s.r.o., 25064 Hovorcovice (CZ)
(72) Inventor: Wieser, Roman Franz, 25064 Hovorcovice (CZ)
(74) Representative: Danek, Vilém

(57) **Abstract**

The equipment for measurement of the tested product consists of a white light source (1), optical prism (2), camera (3) for recording the image and an optical unit (4) for rectification of the white colour. The method concerns the measurement of the tested product, where the light emitted from the source (1) is rectified by the optical unit (4) to the parallel narrow beam passing through the optical prism (2), by which it is disintegrated into the colour spectrum whose reflection on the tested item (5) or its parts is recorded by the camera (3), when the image composed by the camera (3) from individual images, will display all parts on the surface, and the dimensions in axis x and y correspond to the actual dimensions of the recorded item and, at the same time, the colour expression of the item, i.e. the ascertained values of the colour parts [R G, B] of the individual pixels corresponds to its actual height above the surface.

## Description

### Technical field

The invention concerns in general, any measurement or checks where it is necessary to optically measure the distance between the sensor and the tested part. In particular, it can be used in the area of electronics for the measurement and testing of the position of the parts on printed circuit boards or checking the position of the connectors for parts, in the production of boards and other items where there is a demand for measurement of the flatness for the specification of their quality. This invention can also be used for testing the forms of various items when recording an image without the necessity of scanning from more positions, which is particularly recommended for high-production production processes, in the area where it is necessary to test surface roughness and defects, etc.

### Background Art

At present this measurement is performed most frequently with the use of a line laser and a high-speed camera. The line laser is directed from the up to measured surface and the camera which is directed under the stated angle records the profile of the measured part in one coordinate (in one place) so that the laser lights it up. The individual images are recorded with the frequency corresponding to the width of the laser beam and all images are then composed. Using this procedure it is possible to compose a 3D model.
Another method is the use of several cameras which are aimed on the tested area from various angles and from the known trigonometry of the camera inside the tester a 3D model can be composed.
A further method is the use of the Moaré effect, by which, under certain circumstances, it is possible to make the relief of the tested part visible. Images are produced through two line grids, always with inverse brightness. After the composition of both images, when using the interference effect, the relief of the surface is reflected.

### Disclosure of the invention

Equipment for measurement of the tested product by creation of an optical 3D model consists of the following parts:
- White light source, advantageous with a continuous spectrum. The light is rectified by optical units into a parallel, narrow beam which then passes through the optical prism
- The optical prism which mediates the decomposition of the light to the spectrum. The light entering into the prism contains all colour parts. After passing through the optical prism, the white light disintegrates into individual colours according to the law of light refraction. Individual parts are monochromatic and are displayed as a spectrum. The width of this spectrum directly influences distinguishing on the z-axis.
- Camera, advantageous line scanning (single row). The camera gradually records the tested surface line by line while moving. The geometric position of the camera and the light, while recording the whole time, is the same. The camera and the light are adjusted to zero height line by line (ground) so that the camera displays the beginning of the spectrum, i.e. the red colour. All non-zero heights are then displayed in another colour as they are in the colour spectrum.

The method of measurement of the tested product consists of the following steps:
- The first step is the calibration of the colour scale for [mm] of the height. This is performed by scanning the declination of the area where the angle of declination is known in advance with high precision. The image of this declined area will gradually contain the whole spectrum and, at the same time, the height in the actual area will be known from the geometry of the declined area. The function of the dependence colour [R,G,B] = function (height) [mm] will be derived from it
- A further step is testing consisting of the scanning of the surface. The image produced by the camera composites from individual images, displays all parts of the surface. Dimensions in the x and y axes correspond to the actual dimensions of the recorded item. The colour reflection of the item corresponds to its height above the surface.
- Then the software calculates (according to the function acquired during the calibration) the ascertained values of the colour part [R,G,B] of the individual pixels for the actual height (z-axis).

In the actual tested area the software directly returns the values of the height (e.g. upper area of the condenser).

### Advantages and disadvantages of the subject of the invention

The main advantages of the invention are based on the simplicity, resistance and integration of the solution. The recording of the image, together with the scanning of the item for geometric testing is carried out in one step. If it is not necessary to perform test of the area for colour, it is possible to implement a 3D test directly into the normal reading of the image which does not prolong the testing time. It is not necessary to recalculate the 3D model or to model it (as in the case of other systems), the height of the item is colour-recorded in the image and can be directly read. After incorporating into the existing systems no further actions requiring the time are necessary, the invention has only minimum demands for SW and it can be used as an additional module into already existing equipment.
The high variability and usability result from the easily adjustable scope of measurement by which it is possible to achieve the required precision of measurement. The scope of measurement is set by the distance or by turning the optical prism when the width (and also the height) of the colour spectrum is changed by which tested surface is lit. Therefore, it is possible to achieve the precision of measurement for small items and their parts (the measuring range is in tens of mm - e.g. electro technical parts) in several micrometers.

The basis of this equipment are optical parts, therefore, there is no wearing or ageing. The only part with a restricted service life is the source of light; however this varies between hundreds to thousands of hours of operation.

### Examples

### EXAMPLE 1

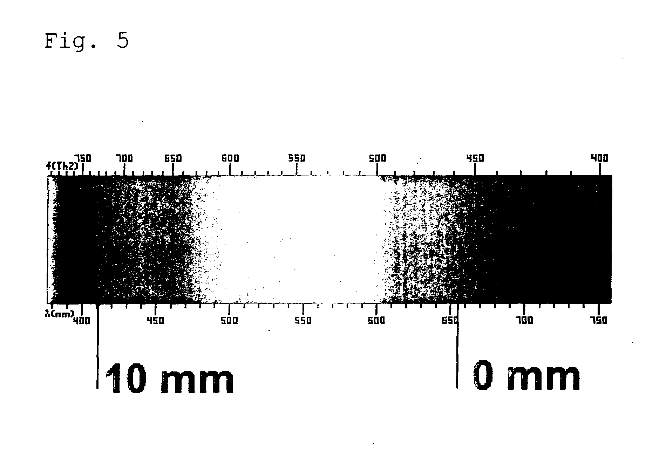

The equipment for measurement of the tested product by creation of an optical 3D model consists of a white light source (1) with a continuous spectrum, an optical prism (2), a line-scanning camera (3) and an optical unit (4) for rectifying the white light into the beam. The light is rectified by the optical unit (4) into a parallel, narrow beam which then passes through the optical prism (2) which mediates the disintegration of the light into the spectrum. (Fig. 5). The light which enters into the prism (2) contains all colour elements. After passing through the optical prism (2) the white light disintegrates into individual colours as per the law of light fraction. The individual parts are monochromatic and are reflected as a spectrum. The width (6) of this spectrum directly influences the resolution in the Z-axis. The line camera (3) (single row) gradually scans the tested surface line by line by which it is moved. The geometric position of the camera (3) and the light is the same during the whole period of scanning. The camera (3) and the light are adjusted to zero height (ground) so that the camera (3) displays the starting (7) of the spectrum, i.e. the red colour. All non-zero heights are displayed in another colour as they are in the colour spectrum.
The manner of measurement of the tested product consists of several steps. The first step is the calibration of the colour spectrum for [mm] of the height. This is performed by scanning the declination of the area where the angle of the declination is known in advance with high precision. The image of this declined area will gradually continue along the whole spectrum and, at the same time, the height in the actual area will be known from the geometry of the declined height. The function of the dependence of the colour [R,G,B] = function(height) [mm] is derived from it.

A further step is testing consisting of the scanning of the surface. The image produced by the camera composites from individual images, displays all parts on the surface. Dimensions in the axes x and y correspond to the actual dimensions of the recorded item. The colour reflection of the item corresponds to its height above the surface. Then the software calculates (according to the function acquired during the calibration) the ascertained values of the colour part [R,G,B] of the individual pixels for the actual height (z-axis). In the actual tested area the software directly returns the values of the height (e.g. the upper area of the condenser).

### EXAMPLE 2

### Testing of electronic boards containing electronic parts:

- The tester is calibrated so that zero height is defined on the surface of the mounted (master) board, in order that the board (ground) after scanning will be displayed in a dark-red colour (starting (7) of the spectrum). The measuring range is selected according to the highest measured part (12) (violet).
- In the testing plant the position is defined along with the height and the tolerance of the measured item (5) (of the board).
- After passing the board through the line-scanning camera (3) its individual parts are displayed in colour depending on their height.
- The software, using the calibration function, transfers colour shades to the values of the height stated in millimetres.
- In the tested areas the actual height of the part is evaluated and with respect to the stated tolerance the output is in the form of information stating whether the tested item (5), the board as a whole (or its individual parts is or is not defective.

### EXAMPLE 3

### Testing of board surfaces:

- The tester is calibrated so that the surface in a normal (acceptable) status will be displayed after scanning in the colour which is usually approximately located in the middle of the spectrum (e.g. green).
- The measuring range is selected, i.e. the maximum (highest) and minimum (lowest) deviations which can occur on the tested board (bending of the board, surface defects, cracks, abrasions, sediments, etc.). The lowest deviation will be displayed in red and the highest will be displayed violet.
- The whole surface of the board is defined as a tested area and the deviation tolerance of deviation is selected.
- The board is scanned by means of an line-scanning camera (3).
- Using the calibration function, the software will convert the colour shades to the values of the height stated in millimetres.
- It is evaluated whether any area has higher deviations than stated by the permitted tolerance. The output is information in the form of whether the tested item (5) (board) is or is not defective.

### Industrial utilisation

The technical solution for the invention can be particularly used for approximate or target inspection of the geometry and measurement of the distance of individual products or their parts, particularly where there is the necessity to optically measure the distance between the sensor and the tested part, i.e. in the direction in which the change is not reflected on the image in the normal status.

### List of related signs:

1 - white light source
2 - optical prism
3 - camera
4 - optical unit for rectification of the white light into the beam
5 - measured item (e.g. board)
6 - width of the colour spectrum
7 - beginning of the colour spectrum
8 - end of the colour spectrum
9 - variant of the direction of movement of the scanned item in axis x
10 - part with the height corresponding to the red colour of the spectrum
11 - part with the height corresponding to the green colour of the spectrum
12 - part with the height corresponding to the violet colour of the spectrum

### List of drawings

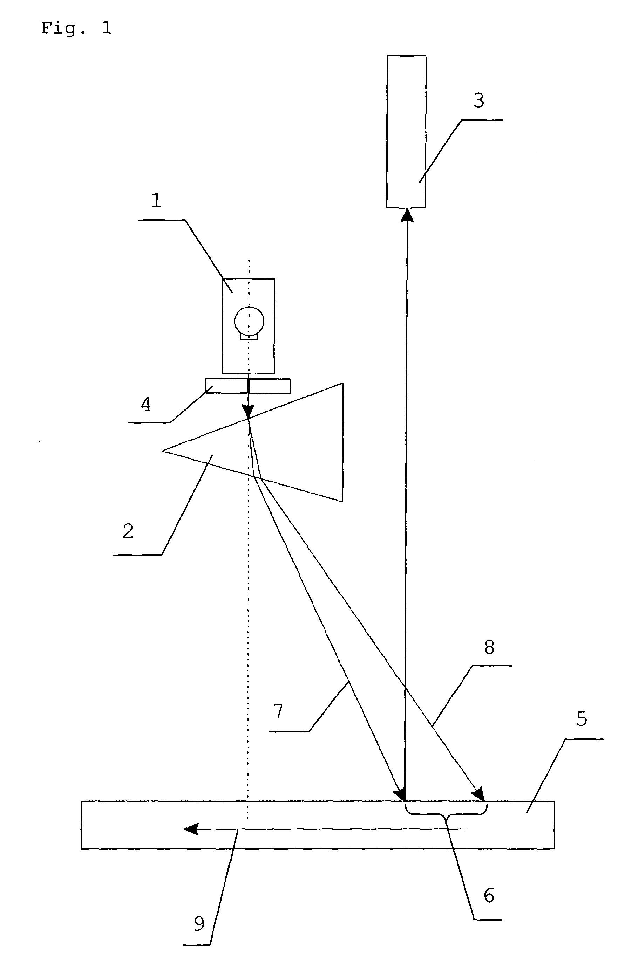

Fig. 1 - equipment for measurement of the tested product adjusted for zero height (ground)

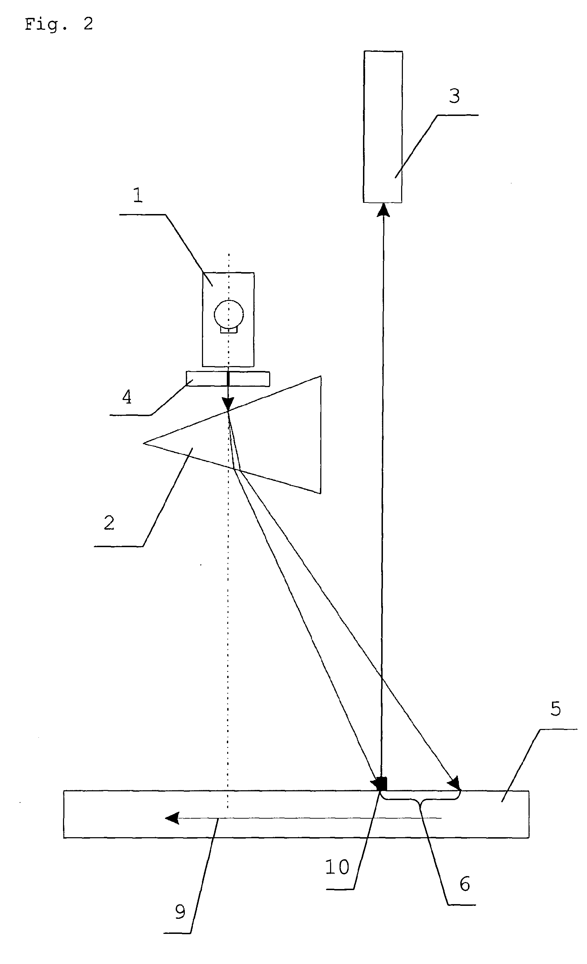

Fig. 2 - equipment for measurement of the tested product with the part with the height corresponding to the red colour of spectrum

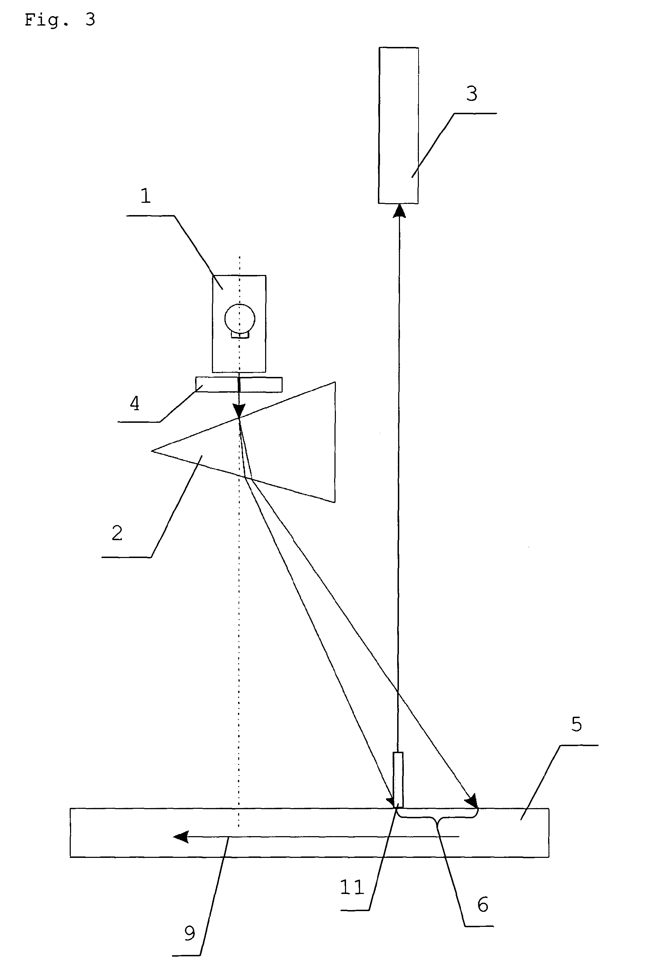

Fig. 3 - equipment for measurement of the tested product with the part with the height corresponding to the green colour of the spectrum

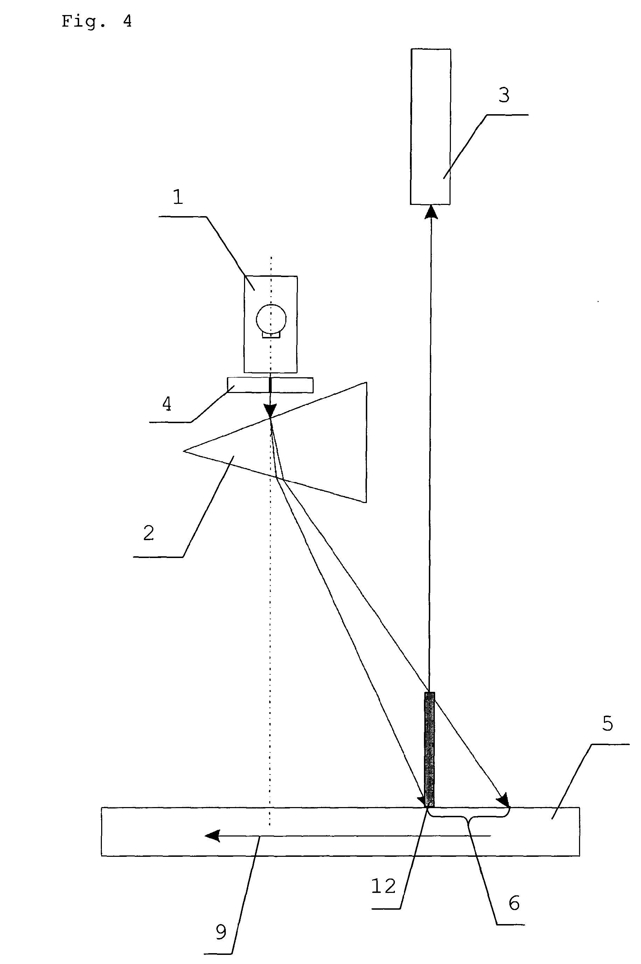

Fig. 4 - equipment for measurement of the tested product with the part with the height corresponding to the violet colour of the spectrum
Fig. 5 - example of the colour spectrum with the scale with the measuring range 0 - 10 mm

## Claims

1. Equipment for measurement of the tested product **characterized in that** it consists of the white light source 1 light, the optical prism 2, the camera 3 for recording the image and optical part 4 for rectification of the white light.

2. Equipment for measurement of the tested product according to demand 1 **characterized in that** the white light source 1 has a continuous spectrum.

3. Equipment for measurement of the tested product according to demand 1 **characterized in that** the camera 3 is line-scanning.

4. Method of measurement of the tested product **characterized in that** the light emitted from the source 1 is rectified by the optical unit 4 into a parallel narrow beam passing through the optical prism 2, by which it is disintegrated into the colour spectrum whose reflection on the tested item 5 or its parts is recorded by the camera 3 when the image composed by the camera from individual images displays all parts on the surface and the dimensions in axis x and y correspond to the actual dimensions of the recorded item and, at the same time, the colour display of the item, i.e. the values of colour part [R,G,B] of the individual pixels correspond to its actual height above the surface.

5. Method of measurement of the tested product according to demand 4 **characterized in that** the colour spectrum is calibrated by the gradual recording of the declination of the area where the angle of declination is known in advance with high precision,

6. Method of measurement of the tested product according to demand 4 **characterized in that** the geometric position of the camera 3 and the light is static during the whole time of scanning.

7. Method of measurement of the tested product according to demand 4 **characterized in that** the camera 3 gradually records line by line the tested surface of the item 5 while it is moved.

8. Method of measurement of the tested product according to demand 4 **characterized in that** the camera 3 and the light is adjusted to zero height so that the camera 3 displays the beginning of the colour spectrum.

9. Method of measurement of the tested product according to demand 4 **characterized in that** the values of the colour shades recorded by the camera 3 are converted by means of the calibration function by software to the actual height of the item 5 or its parts.

10. Method of measurement of the tested product according to demand 4 **characterized in that** the 3D model of the item 5 is produced from the values measured on axes x, y.

11. Use of equipment consisting of the white light source 1, the optical prism 2, the camera 3 for recording the image and the optical unit 4 for rectifying the white light as a tool for the measurement of the dimensions of the tested products.

12. Use of the method according to demands 4 to 10 for measurement of the tested product.
